# EUROPEAN PATENT SPECIFICATION

(11) **EP 1 555 165 B1**
(45) Date of publication and mention of the grant of the patent: **19.03.2008**
(21) Application number: 05000292.2
(22) Date of filing: 08.01.2005
(51) Int. Cl.: B60R 21/01

(54) **Logic unit and method for detecting a vehicle rollover**
Logikeinheit und Verfahren zur Erkennung eines Fahrzeugüberschlags
Unité logique et procédé de détection d'entournement des voitures

(30) Priority: 19.01.2004 PL 36444904
(43) Date of publication of application: 20.07.2005
(73) Proprietor: Delphi Technologies, Inc., Troy, Michigan 48007 (US)
(72) Inventor: Geborek, Mariusz, 30-611 Krakow (PL); Darvish, Abtin, 42119 Wuppertal (DE); Haun, Jens, 44799 Bochum (DE)
(74) Representative: Lukaszyk, Szymon

(56) References cited:
- EP-A- 0 934 855
- US-A- 5 890 084
- US-A1- 2002 075 140
- US-A1- 2003 093 201

## Description

The present invention relates to a logic unit and method for detecting vehicle rollover or dangerous situations that may precede a rollover of a vehicle.

Rollover detection logic units are commonly connected with proper sensors and are employed in rollover detections systems, which aim is to deploy appropriate protection devices such as seat belts pretensioners, pop-up roll bars or air bags, in particular air bags protecting occupants' heads in case of a rollover accident.

In many rollover detection systems two paths of signal processing are used: a main path and an independent arming path constituting separate safety logic. An essential purpose of the safety logic is to decrease the probability of inadvertent deployment in an event of failure or error of main rollover detection logic. An example of such a system is disclosed in U.S. Pat. 6,535,800.

U.S. Pat. Application Publication 2002/0075140 discloses a system and method for sensing vehicle rollover. The system comprises: a roll rate sensor operative to sense a rate of rotation of a vehicle and to provide a roll rate signal; and a controller connected to said roll rate sensor, said controller being operative to determine a roll angle of the vehicle based on the roll rate signal, said controller including a threshold having a value functionally related to roll angle, said controller determining the occurrence of a vehicle rollover condition in response to the sensed roll rate crossing said threshold.

Publication WO 03/010034 discloses a rollover detection system comprising a first roll rate sensor, a lateral acceleration sensor and a main controller determining the probability of a rollover of the vehicle on the basis of the roll rate and lateral acceleration of the vehicle. The system comprises also a safety logic confirming a rollover accident, whose output signal is summed with an output signal of the main rollover detection logic by means of the AND logical operator.

Activation of the main rollover detection logic which is not accompanied with an activation of the safety logic implies a failure of the main logic unit and may lead to its turning off, which is commonly indicated by a proper control signal on a vehicle control panel.

The aim of the present invention is to provide a logic unit and method for detecting a vehicle rollover, which would generate an activation signal during a vehicle rollover or near rollover event, which would be resistive for mechanical vibrations, substantially inactive during normal driving conditions not threatening a rollover and would be applicable as an additional safety solution for rollover detection systems with no need of substantial modification thereof.
#C1According to the present invention there is provided a safety logic unit for detecting a vehicle rollover or near rollover situation, in a rollover detection system, comprising a first main activation path, activated if a vehicle lateral acceleration sensor signal exceeds a first predefined threshold set from about 1.5 to about 5 g; a second main activation path, activated if a vehicle vertical acceleration sensor signal exceeds a second predefined threshold set from about -0.92 to about -0.7 g; and a first additional activation path, activated if both the vehicle roll angle exceeds a third predefined threshold and a vehicle roll rate sensor signal exceeds a fourth predefined threshold set from about 2 to about 15 deg/s; a second additional activation path, activated if the vehicle roll rate sensor signal exceeds a fifth predefined second threshold set from about 15 to about 60 deg/s, and a third additional activation path, activated if a vehicle longitudinal acceleration sensor signal exceeds a sixth predefined threshold, wherein the activation of the logic unit depends on the activation of individual activation paths and for the activation of the logic unit at least one main activation path must be activated.
#C2ln a preferred embodiment of the safety logic unit according to the present invention the activation of at least one main activation path and at least one additional activation path is sufficient for the activation of the logic unit.
#C3ln an alternative advantageous embodiment of the logic unit according to the present invention the activation of the first main activation path, or the second main activation path and at least one additional activation path is sufficient for the activation of the logic unit.
#C4lt is advantageous to connect the safety logic unit according to the present invention with at least one protection device for an occupant of the vehicle, where the activation signal of the safety logic unit is additionally processed before activation of said protection device(s). The term "protection device" as used herein denotes in particular seat belts pretensioners, pop-up roll bars or air bags.

As the logic unit according to the present invention is relatively simple solution, a high probability of its activation in a dangerous situation, not necessarily leading to a vehicle rollover, occurs. Typically, an additional processing of the activation signal involves comparing the signal with an activation signal of another logic unit operating according to another algorithm by means of the AND gate and triggering an appropriate protection device, e.g. deploying an air bag, only if both logic units are active. In other words the logic unit of the present invention is used as additional safety logic in existing rollover detection systems, which shall be explained later in details with reference to exemplary embodiments.
#C5It is also advantageous to connect the safety logic unit according to the present invention with at least one repeatable protection device for an occupant of a vehicle, which may be deployed in potentially dangerous situations and may return to its steady state, when the danger pass, such as mechanical resetable seatbelts pretensioners, where the activation signal of the logic unit is a direct signal to activate said repeatable protection device(s).
#C6It is advantageous if the activation signal of at least one activation path is sustained for a predefined period.
Therefore the activation of the logic unit takes place even if particular activation paths are not activated in the same time. Latching times should be adjusted individually for each vehicle, the unit is employed.
#C7As the logic unit according to the present invention may be used either as an additional safety microcontroller in existing rollover detection systems or as a separate device, it is advantageous, especially in the second case, if it comprises at least one sensor chosen from a lateral acceleration sensor, a vertical acceleration sensor, a roll rate sensor, a roll angle sensor and a longitudinal acceleration sensor. #C8According to another aspect of the present invention there is provided a safety method for detecting a vehicle rollover or near rollover situation, in a rollover detection system, said method comprising the steps of: detecting a lateral acceleration of the vehicle and activating a first main activation path if the lateral acceleration of the vehicle exceeds a first predefined threshold set from about 1.5 to about 5 g; detecting a vertical acceleration of the vehicle and activating a second main activation path if the vertical acceleration of the vehicle exceeds a second predefined threshold set from about -0.92 to about -0.7 g; determining a roll angle and a roll rate of the vehicle and activating a first additional activation path if both the roll angle exceeds a third predefined threshold and the roll rate exceeds a predefined fourth threshold set from about 2 to about 15 deg/s; activating a second additional activation path if the roll rate of the vehicle exceeds a fifth predefined second threshold set from about 15 to about 60 deg/s; detecting a longitudinal acceleration of the vehicle and activating a third additional activation path if the longitudinal acceleration of the vehicle exceeds a sixth predefined threshold; and generating an output activation signal determining the possibility of a rollover of the vehicle, in dependence of activation of individual activation paths, wherein at least one main activation path is necessary for generating the output activation signal.
#C9In an advantageous implementation of the method according to the present invention the activation of at least one main activation path and at least one additional activation path is sufficient for generating the output activation signal.
#C10In an alternative advantageous implementation of the method according to the present invention the activation of the first main activation path, or the second main activation path and at least one additional activation path is sufficient for generating the output activation signal.
#C111t is also advantageous if the method further comprises the step of activation of at least one protection device for an occupant of the vehicle, wherein said output activation signal is additionally processed before activation of said protection device(s).
#C12Advantageously the method further comprises the step of activation of at least one repeatable protection device for an occupant of the vehicle, which may be deployed in potentially dangerous situations and may return to its steady state when the danger pass, such as mechanical resetable seatbelts pretensioners, where said output activation signal is a direct signal to activate said repeatable protection device(s).
The present invention is presented below by way of examples of preferred embodiments with reference to figures of the drawing, in which:
fig. 1 is a block and circuit diagram of a rollover detection logic unit according to the
fig. 3 is a block and circuit diagram of a control unit provided with a safety logic unit according to the present invention, and
fig. 4 shows a coordinate system XYZ associated with the vehicle.

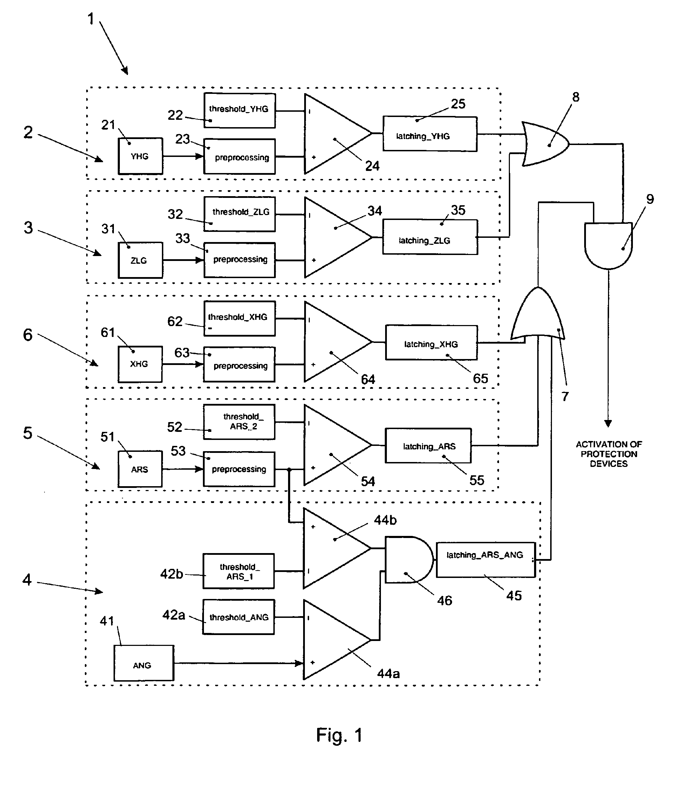

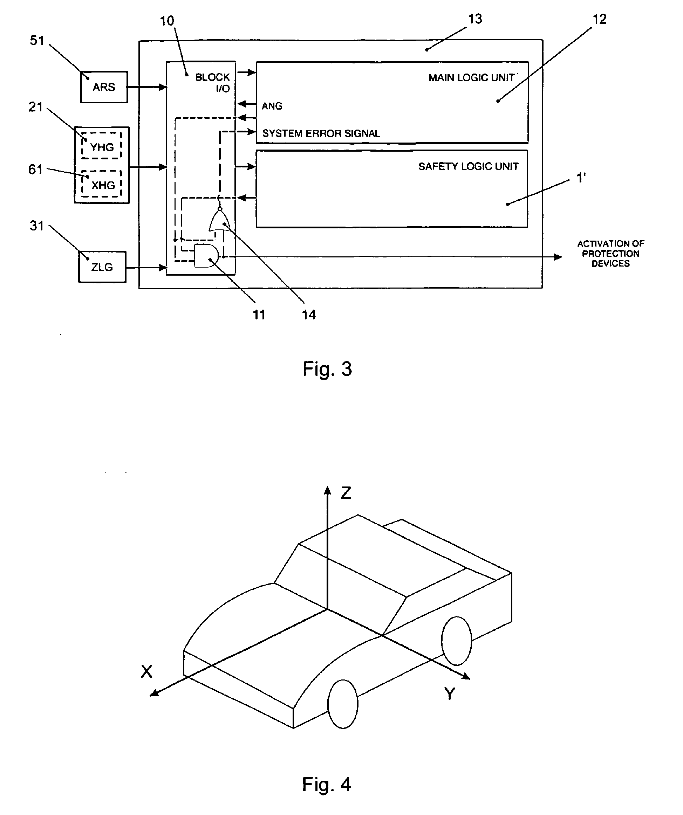

As shown in fig. 1 the safety logic unit 1 comprises two main activation paths: a main high lateral acceleration path (referred below as YHG path) 2 and a main low vertical acceleration path (referred below as ZLG path) 3. The shortened notation follows the assumed coordinate system XYZ associated with the vehicle, as shown in fig. 4.

The first main activation YHG path 2 is activated for example, during the soil trip, side-collision or a curb trip of a vehicle. The input sensor of the main activation path 2 is a vehicle high lateral acceleration sensor (YHG) 21 fixed in the vehicle in such a way that its working axis is perpendicular both to the longitudinal and vertical axis of the vehicle. This sensor may be, e.g. ADXL50 sensor made by Analog Devices, Inc, USA. Sensors of this type are capable to detect accelerations in the range from about 0 g to about ±50 g. A sensor signal 21 is preprocessed in a preprocessing module 23. Then modulus of the output signal of the module 23 is compared in comparator 24 with a predefined threshold value 22 ("threshold_YHG"). If a vehicle lateral acceleration exceeds a predefined threshold value, TRUE logic signal occurs at the output of comparator 24. By setting the value "threshold_YHG" in the range within ±2 g to ±3 g it is possible to detect certain dangerous situations without activation of the unit during normal driving conditions. Greater accelerations are usually accompanied with a vehicle rollover, near rollover event or other dangerous situations. The output value of the comparator 24 is subsequently sustained for a predefined period in the module 25 ("latch ing_YHG") and constitutes the first input of the OR gate 8.

The second main activation ZLG path 3 is activated, for example, when a vehicle is falling into a ditch or moving with a big bank. The input element of the path 3 is a vehicle low vertical acceleration sensor (ZLG) 31, the working axis of which is parallel to the vehicle vertical axis. The sensor is capable to detect low acceleration in the range from about 0 g to about ±2 g. The signal of the sensor 31 is processed in the preprocessing module 33, then modulus of the output signal of the module 33 is compared in the comparator 34 with a predefined threshold value 32 ("threshold_ZLG"). If a vehicle vertical acceleration exceeds the threshold, the TRUE signal occurs at the output of comparator 34. One may assume that a 45 degree bank of a vehicle in relation to a horizontal surface is a dangerous situation which may lead to a vehicle rollover. To detect this situation the "threshold_ZLG" should be set to about -0.7 g, which corresponds to a gravitation component acting on the sensor ZLG (g cos(45°)). The filtered signal value is compared with the "threshold_ZLG" value so that the TRUE signal occurs at the output of the comparator 34 only when the bank of vehicle exceeds 45°. An output value of the comparator 34 is sustained for a predefined period ("latching_ZHG") in the module 35 and constitutes the second input of the OR gate 8.

The output of the OR gate 8 is connected with the input of the AND gate 9, so that the activation of the YHG path 2 or the ZLG path 3 is the activation of one of the inputs of the AND gate 9.

In order not to cause activation of the logic unit during a normal driving conditions, the unit 1 comprises three additional activation paths: the first 4, the second 5 and the third 6 activation path. The output signals of these paths constitute inputs of the OR gate 7. The output of the gate 7 is the second input of the AND gate 9. The TRUE signal at the output of the gate 9 is an activation signal of the logic unit 1.

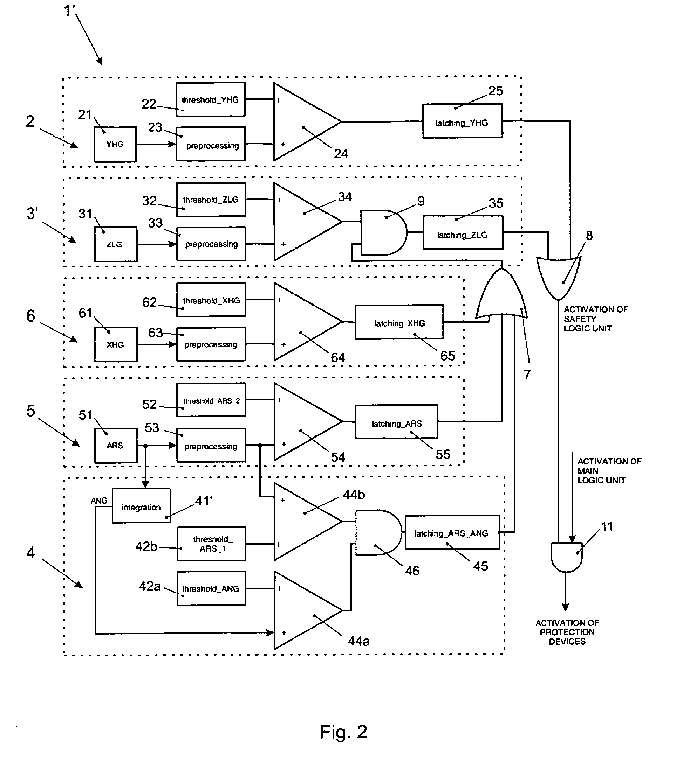

The input signals of the first additional activation path 4 are a roll angle (ANG) of a vehicle and a preprocessed signal of the sensor 51 of the path 5. The roll angle of a vehicle may be measured, e.g. by an inclinometer 41. However, this value is preferably determined by integration of the roll rate signal provided by the sensor 51 in the module 41', as shown in fig. 2.

If the modulus of the roll angle (ANG), exceeds the value 42a ("threshold_ANG") so that the TRUE value appears at the output of the comparator 44a, and at the same time the preprocessed modulus of the ARS sensor 51 signal exceeds the value 42b ("threshold_ARS_1"), leading to an activation of the comparator 44b, at the inputs of the AND gate 46 occur simultaneously two activation values. Consequently, at the output of the AND gate 46 appears activation signal that shall be sustained by the module 45 for a predefined period "latching_ARS_ANG". By setting up the "threshold_ANG" to about 25° and the "threshold_ARS_1" to about 10 °/s, the path 4 shall be activated only when the roll angle of the vehicle exceeds 25⁰ and the vehicle roll rate exceeds 10 °/s.

The angular rate sensor (ARS) 51 is an input element of the second additional activation path 5. The sensor 51 may be a micro sensor ADXRS300 produced by Analog Devices, Inc, USA. The path 5 is activated when the modulus of the sensor 51 signal, after preprocessing by the module 53, exceeds the threshold value 52 ("threshold_ARS_2"). It may occur during rollover of a vehicle moving with a sufficiently high velocity. During simulations it took place during ramp test and other similar rollover schemes, when the first additional activation path 6 was not yet activated. By setting up the "threshold_ARS_2" e.g. to about 50 ⁰/s, the TRUE activation signal appears on the comparator 54 when the angular rate of a vehicle exceeds this threshold. The path 5 is active for a predefined period ("latching_ARS").

The output element of the third additional activation path 6 is a vehicle longitudinal acceleration sensor (XHG) 61 (e.g. ADXL202E sensor, Analog Devices. Inc., USA), having the working axis parallel to the longitudinal axis of a vehicle. Modulus of the signal of the sensor 61, after preprocessing by module 63, is compared in the comparator 64 with a predefined threshold 62 ("threshold_XHG"). The TRUE signal occurs at the output of the comparator 64, if the preprocessed modulus of the signal of the sensor 61 exceeds the "threshold_XHG". The signal of the comparator 64 is kept in the module 65 for a predefined period ("latching_XHG"). Setting up the value "threshold_XHG" e.g. to about 20 g, the TRUE signal occurs at the output of the OR gate 7 only during high accelerations acting along the longitudinal axis of the vehicle, e.g. during front or back collisions. In the alternative embodiment of the safety logic unit it is possible to entirely remove the activation path 6.

The preprocessing modules 23, 33, 53 and 63 scale the signal, remove the sensor drift and broad-band filter the signal to remove a noise before digital sampling.

The first 4, the second 5 or the third 6 additional activation paths are activated only during specific driving conditions that may precede rollover of a vehicle. During normal driving conditions, usually none of them is activated and consequently the FALSE value occurs at the input of the AND gate 9 and the logic unit remains inactive.

The output of the AND gate 9 may be connected with occupant protection devices such as mechanical seat belts pretensioners, not shown in the drawing.

Fig. 2 shows a slightly different embodiment of the logic unit 1'. The reference numerals of elements performing the same functions correspond to those in fig. 1.

In this example a slightly different configuration of the output gates was employed. As shown an activation of the first main activation YHG path 2, the output of which is the first input of the OR gate 8, is sufficient for the activation of the logic unit.

As in the embodiment shown in fig. 1, the activation signals of the additional activation paths 4, 5 and 6 constitute the inputs of the OR gate 7, but the output of the gate 7 is coupled with the input of the AND gate 9, the second input of which is the output of the comparator 34 of the second main activation path 3'. The "threshold_ZLG" 32 was set up to about -0.85 g that results in high sensitivity of the ZLG path to vertical vibrations occurring e.g. during driving the vehicle on a rough road, but the second main activation path 3' shall be activated only when, besides activation of the comparator 34, at least one additional activation path 4, 5 or 6 is active.

The output of the AND gate 9 is sustained by the module 35 for a predefined period ("latching_ZLG") and constitutes the second input of the OR gate 8.

The Table 1 below shows preferred ranges of calibration parameters of the safety logic unit shown in fig. 2 and their exemplary values. The right choice of these parameters depends on a huge amount of factors e.g. a wheel track, a mass, a position of a centre of gravity, or a moment of inertia of the vehicle.

**Table 1**

| Calibration parameter | Preferred range | Example value |
|---|---|---|
| threshold_ZLG | -0.7 to -0.92 [g] | -0.85 g |
| latching_ZLG | 0.1 to 0.8 [s] | 0.4 s |
| threshold_YHG | 1.5 to 5 [g] | 2.5 g |
| latching_YHG | 0.04 to 0.12 [s] | 0.12 s |
| latching_XHG | 0 to 0.20 [s] | 0 s |
| latching_ARS | 0 to 0.20 [s] | 0 s |
| latching_ARS_ANG | 0 to 0.20 [s] | 0 s |
| threshold_XHG | 5 to 30 [g] | 5 g |
| threshold_ARS_1 | 2 to 15 [deg/s] | 3 deg/s |
| threshold_ARS_2 | 15 to 60 [deg/s] | 40 deg/s |
| threshold_ANG | 25 to 40 [deg] | 30 deg |

It is understood, that exemplary embodiments described above may be implemented both as electronic circuits having appropriate comparators, filters and summing gates, as well as a suitable algorithm (a method of processing) of an electronic control unit (ECU).

In practical applications it is favourable to employ two separate ECUs: a main unit and an additional safety unit such as logic unit of the present invention. The main unit and the safety unit may also be implemented in two separate microcontrollers of the same ECU.

The logic unit shown in fig. 2 performs a function of an additional safety unit. The output of the OR gate 8 is connected with the input of the AND gate11, the second input of which is the activation signal of the main logic unit, not shown in the drawing, that in general operates according to more sophisticated algorithm. A suitable protection device shall be activated only when both units are active.

Fig. 3 shows an exemplary implementation of the rollover determination system 13, comprising the safety logic unit 1', shown in fig. 2. The system 13 employs two ECU microcontrollers: a main logic microcontroller 12 and a safety logic microcontroller 1'. Both microcontrollers are connected to an input/output block 10, through which they collect required working variables from the vehicle roll rate sensors ARS 51, an integrated vehicle high acceleration sensor XHG 61 and YHG 21 and the vehicle vertical low acceleration sensor ZLG 31, connected to the input/output block 10. A roll angle (ANG) determined by the main logic microcontroller 12 by roll rate integration is delivered to the I/O block 10, and subsequently to the safety microcontroller 1'. The output of the main microcontroller is coupled with the input of the AND gate 11 built in the I/O block 10. The second input of the gate 11 is coupled with the output of the safety logic 1'. To activate appropriate protection device, e.g. an air-bag, both microcontrollers need to be activated. Additionally, the block 10 comprises the XOR gate 14, coupled with the output of the gate 11 and the output of the main logic 12. The output of the XOR gate 14 is coupled with the main logic, so that the activation of the gate 14 occurs during activation of the main logic 12 without activation of the safety logic. Such a situation indicates a malfunction of the rollover determination system and leads to its turning off.

## Claims

1. A safety logic unit for detecting a vehicle rollover or near rollover situation, in a rollover detection system, wherein, it comprises
a first main activation path (2), activated if a vehicle lateral acceleration sensor (21) signal exceeds a first predefined threshold (22) set from about 1.5 to about 5 g;
a second main activation path (3), activated if a vehicle vertical acceleration sensor (31) signal exceeds a second predefined threshold (32) set from about - 0.92 to about -0.7 g; and
a first additional activation path (4), activated if both a vehicle roll angle exceeds a third predefined threshold (42a) and a vehicle roll rate sensor (51) signal exceeds a fourth predefined threshold (42b) set from about 2 to about 15 deg/s;
a second additional activation path (5), activated if the vehicle roll rate sensor (51) signal exceeds a fifth predefined second threshold (52) set from about 15 to about 60 deg/s, and
a third additional activation path (6), activated if a vehicle longitudinal acceleration sensor (61) signal exceeds a sixth predefined threshold (62),
wherein the activation of the logic unit (1, 1') depends on the activation of individual activation paths and for the activation of the logic unit (1, 1') at least one main activation path must be activated.

2. The logic unit as claimed in claim 1, wherein, the activation of at least one main activation path (2, 3) and at least one additional activation path (4, 5, 6) is sufficient for the activation of the logic unit (1).

3. The logic unit as claimed in claim 1, wherein, the activation of the first main activation path (2), or the second main activation path (3') and at least one additional activation path (4, 5, 6) is sufficient for the activation of the logic unit (1').

4. The logic unit as claimed in claim 1, wherein, it is connected with at least one protection device for an occupant of the vehicle, where the activation signal of the logic unit is additionally processed before activation of said protection device(s).

5. The logic unit as claimed in claim 1, wherein, it is connected with at least one repeatable protection device for an occupant of the vehicle, which may be deployed in potentially dangerous situations and may return to its steady state, when the danger pass, such as mechanical resetable seatbelts pretensioners, where the activation signal of the logic unit is a direct signal to activate said repeatable protection device(s).

6. The logic unit as claimed in claim. 1, wherein, the activation signal of at least one activation path (2, 3, 3', 4, 5, 6) is sustained for a predefined period.

7. The logic unit as claimed in claim. 1, wherein, it comprises at least one sensor chosen from a lateral acceleration sensor (21), a vertical acceleration sensor (31), a roll rate sensor (51), a roll angle sensor (41) and a longitudinal acceleration sensor (61).

8. A safety method for detecting a vehicle rollover or near rollover situation, in a rollover detection system, wherein, it comprises the steps of:
detecting a lateral acceleration of the vehicle and activating a first main activation path if the lateral acceleration of the vehicle exceeds a first predefined threshold set from about 1.5 to about 5 g;
detecting a vertical acceleration of the vehicle and activating a second main activation path if the vertical acceleration of the vehicle exceeds a second predefined threshold set from about -0.92 to about -0.7 g;
determining a roll angle and a roll rate of the vehicle and activating a first additional activation path if both the roll angle exceeds a third predefined threshold and the roll rate exceeds a predefined fourth threshold set from about 2 to about 15 deg/s;
activating a second additional activation path if the roll rate of the vehicle exceeds a fifth predefined second threshold set from about 15 to about 60 deg/s;
detecting a longitudinal acceleration of the vehicle and activating a third additional activation path if the longitudinal acceleration of the vehicle exceeds a sixth predefined threshold;
and generating an output activation signal determining the possibility of a rollover of the vehicle, in dependence of activation of individual activation paths, wherein at least one main activation path is necessary for generating the output activation signal.

9. The method as claimed in claim. 8, wherein, the activation of at least one main activation path and at least one additional activation path is sufficient for generating the output activation signal.

10. The method as claimed in claim. 8, wherein, the activation of the first main activation path, or the second main activation path and at least one additional activation path is sufficient for generating the output activation signal.

11. The method as claimed in claim. 8, wherein, it further comprises the step of the activation of at least one protection device for an occupant of the vehicle, where said output activation signal is additionally processed before the activation of said protection device(s).

12. The method as claimed in claim.8, wherein, it further comprises the step of the activation of at least one repeatable protection device for an occupant of the vehicle, which may be deployed in potentially dangerous situations and may return to its steady state, when the danger pass, such as mechanical resetable seatbelts pretensioners, where said output activation signal is a direct signal to activate said repeatable protection device(s).

13. The method as claimed in claim. 8, wherein, the activation signal of at least one activation path is sustained for a predefined period.

## Patentansprüche

1. Sicherheitslogikeinheit zur Detektion einer Überschlags- oder Beinahe-Überschlagssituation eines Fahrzeugs in einem Überschlagdetektionssystem, wobei sie umfasst:
einen ersten Hauptaktivierungspfad (2), der aktiviert wird, wenn ein Signal eines Fahrzeugquerbeschleunigungssensors (21) einen ersten vordefinierten Schwellenwert (22) überschreitet, der auf etwa 1,5 bis etwa 5 g eingestellt ist;
einen zweiten Hauptaktivierungspfad (3), der aktiviert wird, wenn ein Signal eines Fahrzeugvertikalbeschleunigungssensors (31) einen zweiten vordefinierten Schwellenwert (32) überschreitet, der auf etwa -0,92 bis etwa -0,7 g eingestellt ist; und
einen ersten zusätzlichen Aktivierungspfad (4), der aktiviert wird, wenn sowohl ein Fahrzeugrollwinkel einen dritten vordefinierten Schwellenwert (42a) überschreitet als auch ein Signal eines Fahrzeugrollratensensors (51) einen vierten vordefinierten Schwellenwert (42b) überschreitet, der auf etwa 2 bis etwa 15 Grad/ s eingestellt ist;
einen zweiten zusätzlichen Aktivierungspfad (5), der aktiviert wird, wenn das Signal des Fahrzeugrollratensensors (51) einen fünften vordefinierten zweiten Schwellenwert (52) überschreitet, der auf etwa 15 bis etwa 60 Grad/s eingestellt ist, und
einen dritten zusätzlichen Aktivierungspfad (6), der aktiviert wird, wenn ein Signal eines Fahrzeuglängsbeschleunigungssensors (61) einen sechsten vordefinierten Schwellenwert (62) überschreitet,
wobei die Aktivierung der Logikeinheit (1, 1') von der Aktivierung einzelner Aktivierungspfade abhängt und mindestens ein Hauptaktivierungspfad für die Aktivierung der Logikeinheit (1, 1') aktiviert sein muss.

2. Logikeinheit nach Anspruch 1, wobei die Aktivierung mindestens eines Hauptaktivierungspfads (2, 3) und mindestens eines zusätzlichen Aktivierungspfads (4, 5, 6) für die Aktivierung der Logikeinheit (1) ausreichend ist.

3. Logikeinheit nach Anspruch 1, wobei die Aktivierung des ersten Hauptaktivierungspfads (2) oder des zweiten Hauptaktivierungspfads (3') und mindestens eines zusätzlichen Aktivierungspfads (4, 5, 6) für die Aktivierung der Logikeinheit (1') ausreichend ist.

4. Logikeinheit nach Anspruch 1, wobei sie mit mindestens einer Schutzeinrichtung für einen Insassen des Fahrzeugs verbunden ist, bei der/denen das Aktivierungssignal der Logikeinheit vor einer Aktivierung der Schutzeinrichtung(en) zusätzlich verarbeitet wird.

5. Logikeinheit nach Anspruch 1, wobei sie mit mindestens einer wiederholbaren Schutzeinrichtung für einen Insassen des Fahrzeugs verbunden ist, welche in möglicherweise gefährlichen Situationen ausgelöst werden kann und in ihren stationären Zustand zurückkehren kann, wenn die Gefahr vorüber ist, wie z.B. mechanisch rücksetzbare Sitzgurtstraffer, bei der/denen das Aktivierungssignal der Logikeinheit ein direktes Signal zur Aktivierung der wiederholbaren Schutzeinrichtung(en) ist.

6. Logikeinheit nach Anspruch 1, wobei das Aktivierungssignal mindestens eines Aktivierungspfads (2, 3, 3', 4, 5, 6) für eine vordefinierte Zeitspanne aufrechterhalten wird.

7. Logikeinheit nach Anspruch 1, wobei sie mindestens einen Sensor umfasst, der aus einem Querbeschleunigungssensor (21), einem Vertikalbeschleunigungssensor (31), einem Rollratensensor (51), einem Rollwinkelsensor (41) und einem Längsbeschleunigungssensor (61) gewählt ist.

8. Sicherheitsverfahren zur Detektion einer Überschlags- oder Beinahe-Überschlagssituation eines Fahrzeugs in einem Überschlagdetektionssystem, wobei es die Schritte umfasst:
Detektieren einer Querbeschleunigung des Fahrzeugs und Aktivieren eines ersten Hauptaktivierungspfads, wenn die Querbeschleunigung des Fahrzeugs einen ersten vordefinierten Schwellenwert überschreitet, der auf etwa 1,5 bis etwa 5 g eingestellt ist;
Detektieren einer Vertikalbeschleunigung des Fahrzeugs und Aktivieren eines zweiten Hauptaktivierungspfads, wenn die Vertikalbeschleunigung des Fahrzeugs einen zweiten vordefinierten Schwellenwert überschreitet, der auf etwa -0,92 bis etwa -0,7 g eingestellt ist;
Ermitteln eines Rollwinkels und einer Rollrate des Fahrzeugs und Aktivieren eines ersten zusätzlichen Aktivierungspfads, wenn sowohl der Rollwinkel einen dritten vordefinierten Schwellenwert überschreitet als auch die Rollrate einen vordefinierten vierten Schwellenwert überschreitet, der auf etwa 2 bis etwa 15 Grad/ s eingestellt ist;
Aktivieren eines zweiten zusätzlichen Aktivierungspfads, wenn die Rollrate des Fahrzeugs einen fünften vordefinierten zweiten Schwellenwert überschreitet, der auf etwa 15 bis etwa 60 Grad/ s eingestellt ist;
Detektieren einer Längsbeschleunigung des Fahrzeugs und Aktivieren eines dritten zusätzlichen Aktivierungspfads, wenn die Längsbeschleunigung des Fahrzeugs einen sechsten vordefinierten Schwellenwert überschreitet;
und Erzeugen eines Ausgangsaktivierungssignals, das die Möglichkeit eines Überschlags des Fahrzeugs in Abhängigkeit von einer Aktivierung individueller Aktivierungspfade bestimmt, wobei mindestens ein Hauptaktivierungspfad notwendig ist, um das Ausgangsaktivierungssignal zu erzeugen.

9. Verfahren nach Anspruch 8, wobei die Aktivierung mindestens eines Hauptaktivierungspfads und mindestens eines zusätzlichen Aktivierungspfads ausreichend ist, um das Ausgangsaktivierungssignal zu erzeugen.

10. Verfahren nach Anspruch 8, wobei die Aktivierung des ersten Hauptaktivierungspfads oder des zweiten Hauptaktivierungspfads und mindestens eines zusätzlichen Aktivierungspfads ausreichend ist, um das Ausgangsaktivierungssignal zu erzeugen.

11. Verfahren nach Anspruch 8, wobei es ferner den Schritt der Aktivierung mindestens einer Schutzeinrichtung für einen Insassen des Fahrzeugs umfasst, bei der/denen das Ausgangsaktivierungssignal vor der Aktivierung der Schutzeinrichtung(en) zusätzlich verarbeitet wird.

12. Verfahren nach Anspruch 8, wobei es ferner den Schritt der Aktivierung mindestens einer wiederholbaren Schutzeinrichtung für einen Insassen des Fahrzeugs umfasst, welche in möglicherweise gefährlichen Situationen ausgelöst werden kann und in ihren stationären Zustand zurückkehren kann, wenn die Gefahr vorüber ist, wie z.B. mechanisch rücksetzbare Sitzgurtstraffer, bei der/denen das Ausgangsaktivierungssignal ein direktes Signal zur Aktivierung der wiederholbaren Schutzeinrichtung(en) ist.

13. Verfahren nach Anspruch 8, wobei das Aktivierungssignal mindestens eines Aktivierungspfads für eine vordefinierte Zeitspanne aufrechterhalten wird.

## Revendications

1. Unité logique de sécurité permettant de détecter un retournement ou une situation proche d'un retournement de véhicule, dans un système de détection de retournement, cette unité comprenant :
- une première voie principale d'activation (2), activée si un détecteur d'accélération latérale de véhicule (21) dépasse un premier seuil prédéfini (22) établi entre environ 1,5 et 5 g environ ;
- une deuxième voie principale d'activation (3), activée si un détecteur d'accélération verticale (31) dépasse un deuxième seuil prédéfini (32), établi entre environ - 0,92 et - 0,7 g environ ; et
- une première voie supplémentaire d'activation (4), activée si à la fois, un angle de roulis de véhicule dépasse un troisième seuil prédéfini (42a) et un signal de capteur (51) de vitesse de roulis de véhicule dépasse un quatrième seuil prédéfini (42b), établi entre environ 2 et 15°/s environ ;
- une deuxième voie supplémentaire d'activation (5), activée si le signal du capteur (51) de vitesse de roulis de véhicule dépasse un cinquième seuil prédéfini (52) établi entre environ 15 et 60°/s environ ; et
- une troisième voie supplémentaire d'activation (6), activée si un signal de capteur (61) d'accélération longitudinale de véhicule dépasse un sixième seuil prédéfini (62),
l'activation de l'unité logique (1, 1') dépendant de l'activation de voies individuelles d'activation et au moins une voie principale d'activation devant être activée pour l'activation de l'unité logique (1, 1').

2. Unité logique selon la revendication 1, dans laquelle l'activation d'au moins une voie principale d'activation (2, 3) et d'au moins une voie supplémentaire d'activation (4, 5, 6) suffit à activer l'unité logique (1).

3. Unité logique selon la revendication 1, dans laquelle l'activation de la première voie principale d'activation (2), ou de la deuxième voie principale d'activation (3') et d'au moins une voie supplémentaire d'activation (4, 5, 6), suffit à activer l'unité logique (1').

4. Unité logique selon la revendication 1, qui est reliée au moins à un dispositif de protection destiné à un occupant du véhicule, le signal d'activation de l'unité logique étant en outre traité avant activation dudit ou desdits dispositif(s) de protection.

5. Unité logique selon la revendication 1, qui est reliée au moins à un dispositif de protection capable de répétition et destiné à un occupant du véhicule, qui peut se déployer dans des situations potentiellement dangereuses et qui peut retrouver son état stable, lorsque le danger est écarté, comme des prétendeurs mécaniques re-réglables de ceintures de sécurité, le signal d'activation de l'unité logique étant un signal direct destiné à activer ledit ou lesdits dispositif(s) de protection capables de répétition.

6. Unité logique selon la revendication 1, dans laquelle le signal d'activation d'au moins une voie d'activation (2, 3, 3', 4, 5, 6) est maintenu pendant une période prédéfinie.

7. Unité logique selon la revendication 1, qui comprend au moins un détecteur choisi parmi un détecteur d'accélération latérale (21), un détecteur d'accélération verticale (31), un détecteur de vitesse de roulis (51), un détecteur d'angle de roulis (41) et un détecteur d'accélération longitudinale (61).

8. Procédé de sécurité permettant de détecter un retournement de véhicule ou une situation proche d'un retournement, dans un système de détection de retournement, ce procédé comprenant les étapes suivantes :
- détection d'une accélération latérale du véhicule et activation d'une première voie principale d'activation si l'accélération latérale de véhicule dépasse un premier seuil prédéfini, établi entre environ 1,5 et 5 g environ ;
- détection d'une accélération verticale du véhicule et activation d'une deuxième voie principale d'activation si l'accélération verticale du véhicule dépasse un deuxième seuil prédéfini, établi entre environ - 0,92 et - 0,7 g environ ;
- détection d'un angle de roulis et d'une vitesse de roulis du véhicule et activation d'une première voie supplémentaire d'activation si à la fois, l'angle de roulis dépasse un troisième seuil prédéfini et la vitesse de roulis dépasse un quatrième seuil prédéfini établi entre environ 2 et 15°/s environ ;
- activation d'une deuxième voie supplémentaire d'activation si la vitesse de roulis de roulis du véhicule dépasse un cinquième seuil prédéfini, établi entre environ 15 et 60°/s environ ;
- détection d'une accélération longitudinale du véhicule et activation d'une troisième voie supplémentaire d'activation si l'accélération longitudinale du véhicule dépasse un sixième seuil prédéfini ;
- et production d'un signal d'activation de sortie déterminant la possibilité d'un retournement du véhicule, en fonction de l'activation de voies individuelles d'activation, au moins une voie principale d'activation étant nécessaire pour produire le signal d'activation de sortie.

9. Procédé selon la revendication 8, dans lequel l'activation d'au moins une voie principale d'activation et d'au moins une voie supplémentaire d'activation suffit à produire le signal d'activation de sortie.

10. Procédé selon la revendication 8, dans lequel l'activation de la première voie principale d'activation ou de la deuxième voie principale d'activation et d'au moins une voie supplémentaire d'activation suffit à produire le signal d'activation de sortie.

11. Procédé selon la revendication 8, qui comprend en outre l'étape d'activation d'au moins un dispositif de protection destiné à un occupant du véhicule, ledit signal d'activation de sortie étant en outre traité avant l'activation dudit ou desdits dispositif(s) de protection.

12. Procédé selon la revendication 8, qui comprend en outre l'étape d'activation d'au moins un dispositif de protection capable de répétition et destiné à un occupant du véhicule, qui peut se déployer dans des situations potentiellement dangereuses et qui peut retrouver son état stable, lorsque le danger est écarté, comme des prétendeurs mécaniques re-réglables de ceintures de ceintures de sécurité, le signal d'activation de sortie étant un signal direct destiné à activer ledit ou lesdits dispositif(s) de protection capables de répétition.

13. Procédé selon la revendication 8, dans lequel le signal d'activation d'au moins une voie d'activation est maintenu pendant une période prédéfinie.
